(19) Europäisches Patentamt
European Patent Office
Office européen des brevets

(11) **EP 4 668 046 A1**

(12) **EUROPEAN PATENT APPLICATION**
published in accordance with Art. 153(4) EPC

(43) Date of publication:
**24.12.2025 Bulletin 2025/52**

(21) Application number: **23922497.5**

(22) Date of filing: **19.12.2023**

(51) International Patent Classification (IPC):
*G05D 13/62* *(2006.01)*

(52) Cooperative Patent Classification (CPC):
**G05D 13/62**

(86) International application number:
**PCT/CN2023/139931**

(87) International publication number:
**WO 2024/169381 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.02.2023 CN 202310106021**

(71) Applicant: KUKA Robotics Guangdong Co., Ltd.
**Foshan, Guangdong 528315 (CN)**

(72) Inventors:
• ZHONG, Wenjin
  Foshan, Guangdong 528315 (CN)
• WANG, Shengping
  Foshan, Guangdong 528315 (CN)
• ZHANG, Guozhu
  Foshan, Guangdong 528315 (CN)

(74) Representative: Oelke, Jochen
KUKA Aktiengesellschaft
Zugspitzstraße 140
86165 Augsburg (DE)

(54) **SERVO CONTROL METHOD, APPARATUS AND SYSTEM, ROBOT, AND READABLE STORAGE MEDIUM**

(57) A servo control method, apparatus (700, 800), and system (600), a robot (900), and a readable storage medium (902). The servo control method is executed by the servo control system (600). The servo control system (600) comprises a command interpolation module (610), a velocity command determination module (640), a command delay module (620), a position controller (630), and a velocity controller (650). The servo control method comprises: when a command interpolation module (610) receives a position command signal, a command delay module (620) determines a delay duration corresponding to the position command signal (102); a velocity command determination module (640) determines a velocity feedforward command signal based on the position command signal (104); the velocity command determination module (640) transmits the velocity feedforward command signal to a velocity controller (650) (106); and the command delay module (620) transmits the position command signal to a position controller (630) in a delayed manner based on the delay duration (108).

FIG.1

**Description**

This application claims priority to Chinese Patent Application No. 202310106021.0 filed with the China National Intellectual Property Administration on February 13, 2023 and entitled "SERVO CONTROL METHOD, APPARATUS AND SYSTEM, ROBOT, AND COMPUTER-READABLE STORAGE MEDIUM", the entire contents of which are herein incorporated by reference.

**FIELD**

The present application relates to the technical field of servo control, and particularly relates to a servo control method, apparatus and system, a robot, and a computer-readable storage medium.

**BACKGROUND**

In a robot servo system, feedforward control is often adopted to improve trajectory tracking accuracy and reduce position overshoot.

In related art, a velocity feedforward value is usually obtained by differentiating a position command via a servo control system. However, the velocity feedforward has significant high-frequency noise components and is not smooth, so a low-pass filter is usually introduced to reduce the high-frequency noise components. As both differential calculation and low-pass filtering will introduce phase lag, this results in phase inconsistency between the position command and a velocity feedforward command.

**SUMMARY**

Contents of the application

The present application aims to solve at least one of the technical problems existing in the prior art or the related art.

Thus, the first aspect of the present application provides a servo control method.

The second aspect of the present application provides a servo control system.

The third aspect of the present application provides a servo control apparatus.

The fourth aspect of the present application provides a servo control apparatus.

The fifth aspect of the present application provides a computer-readable storage medium.

The sixth aspect of the present application provides a robot.

In view of this, according to the first aspect of the present application, a servo control method is provided, and is executed by a servo control system; the servo control system comprises a command interpolation module, a velocity command determination module, a command delay module, a position controller and a velocity controller, and the servo control method comprises: when the command interpolation module receives a position command signal, a delay duration corresponding to the position command signal is determined via the command delay module; the velocity command determination module determines a velocity feedforward command signal based on the position command signal; the velocity command determination module transmits the velocity feedforward command signal to the velocity controller; and the command delay module transmits the position command signal to the position controller in a delayed manner based on the delay duration.

The servo control method defined in the present application is applied to a servo control system. The servo control system is configured to drive a robotic arm of a robot. The robotic arm comprises multiple joint axes, each joint axis is driven by an electric motor, and the operation of the electric motor is driven via the servo control system. During the process of controlling the movement of the robotic arm, in order to improve the tracking accuracy of the robotic arm and reduce position overshoot, the movement of the robotic arm is controlled via a velocity feedforward method.

Wherein, the servo control system comprises a command interpolation module, a command delay module, a position controller, a velocity command determination module, and a velocity controller. The command interpolation module can receive the position command signal sent by a motion controller and send the position command signal to the command delay module for delay processing, the command interpolation module transmits the position command signal to the velocity command determination module, and the velocity command determination module can perform differential processing based on the position command signal to obtain the velocity feedforward command signal. The velocity command determination module transmits the velocity feedforward command signal to the velocity controller, the command delay module transmits the position command signal to the position controller in a delayed manner, so that the moment when the velocity controller receives the velocity feedforward command signal is close to the moment when the position controller receives the position command signal, thereby reducing the phase difference between the position command signal and the velocity feedforward command signal.

In the technical solution, delay processing is performed on the position command signal via the command delay module, thereby reducing the phase difference between the velocity feedforward command signal and the position command signal. It should be noted that the velocity command determination module performs differential processing on the position command signal, and transmits the velocity feedforward command signal obtained from differential processing to the velocity controller after filtering, that is, there is a certain delay in transmitting the velocity feedforward command signal to the velocity controller.

In the technical solution of the present application, by adding a command delay module in the servo control system, after controlling the command delay module to perform delay processing on the position command signal, the position command signal is transmitted to the position controller, and thus the phase difference between the position command signal and the velocity feedforward command signal is reduced, and suppressing overshoot and enhancing the accuracy of controlling the trajectory of a robot are achieved in the case that the velocity feedforward gain is 100%.

In any of the above technical solutions, the velocity command determination module comprises a velocity feedforward command calculator; the velocity command determination module determines the velocity feedforward command signal based on the position command signal, which comprises: processing the position command signal via the velocity feedforward command calculator to obtain the velocity feedforward command signal.

In the technical solution, the velocity command determination module comprises the velocity feedforward command calculator. The velocity feedforward command calculator is capable of calculating the velocity feedforward command signal based on the position command signal sent by the motion controller, thereby enabling the servo control system to perform velocity feedforward control on the electric motor.

Specifically, in the process of determining the velocity feedforward command signal, the velocity feedforward command calculator performs a differential calculation on the position command signal based on a velocity feedforward gain, and then the velocity feedforward command signal can be obtained. It should be noted that the value range of the velocity feedforward gain is from 0% to 100%. Users can set the specific value of the velocity feedforward gain before controlling an electronic device via the servo control system. The velocity feedforward command calculator calculates the velocity feedforward command signal based on the velocity feedforward gain and the position command signal.

In the technical solution of the present application, the velocity feedforward command calculator is provided within the velocity command determination module. After the motion controller transmits the position command signal to the command interpolation module, the command interpolation module inputs the position command signal into the velocity feedforward command calculator of the velocity command determination module. Differential processing is performed on the position command signal via the velocity feedforward command calculator to obtain a corresponding velocity feedforward control signal, thereby achieving accurately determining the velocity feedforward command signal which performs velocity feedforward control on the electric motor, ensuring the accuracy of the control on the electric motor and thus enhancing the precision of the motion trajectory of a robot.

In any of the above technical solutions, the velocity command determination module further comprises a filter. The input end of the filter is configured to receive the velocity feedforward command signal, and the output end of the filter is connected to the velocity controller.

The velocity command determination module transmits the velocity feedforward command signal to the velocity controller, which comprises performing low-pass filtering on the velocity feedforward command signal via the filter, and transmitting the filtered velocity feedforward command signal to the velocity controller.

In the technical solution, the velocity command determination module further comprises a filter, and the filter can be a low-pass filter. After low-pass filtering is performed on the velocity feedforward command signal generated by the velocity command determination module via the low-pass filter, the velocity feedforward command signal is transmitted to the velocity controller. That is, the high-frequency noise components in the velocity feedforward command signal can be removed via the filter, so that the velocity feedforward command signal is relatively smooth.

Specifically, the velocity command determination module comprises the filter and the velocity feedforward command calculator. The output end of the velocity feedforward command calculator is connected to the input end of the filter, and the output end of the filter is connected to the velocity controller. The velocity feedforward command calculator is a signal input end of the velocity command determination module. That is, the command interpolation module transmits the position command signal to the velocity feedforward command calculator for differential calculation to obtain the velocity feedforward command signal. The velocity feedforward command signal is filtered by the filter, and then transmitted to the velocity controller.

In the technical solution of the present application, since the velocity feedforward command signal is obtained by differentiating the position command signal via the velocity feedforward command calculator, the velocity feedforward command signal has significant high-frequency noise components and is not smooth enough. By performing low-pass filtering on the velocity feedforward command signal via the filter, the high-frequency noise components in the velocity feedforward command signal can be removed, so that the velocity feedforward command signal is relatively smooth, and the accuracy of the velocity feedforward control of the electric motor is further improved.

In any of the above technical solutions, when the command interpolation module receives the position command signal, determining the delay duration corresponding to the position command signal via the command delay module comprises that the command delay module acquires a constant-speed loop frequency, the command delay module determines a first duration based on the constant-speed loop frequency, and the command delay module determines the delay duration based on the first duration and a preset coefficient.

In the technical solution, the command delay module can determine the first duration based on the constant-speed loop frequency of the electric motor. The command delay module determines the delay duration for the delayed transmission of the position command signal using the preset coefficient. The constant-speed loop frequency refers to a frequency within a control loop of the electric motor at which the electric motor operates at a constant speed.

In the technical solution of the present application, the servo control system can automatically set the delay duration for the delayed transmission of the position command signal based on the constant-speed loop frequency of the electric motor and the preset coefficient, and control the delayed transmission of the position command signal using the delay duration, and further reduce the phase difference between the position command signal and the velocity feedforward command signal.

In any of the above technical solutions, when the position command signal is received, determining the delay duration corresponding to the position command signal via the command delay module comprises that the command delay module receives a delay setting signal, and the command delay module determines the delay duration based on the delay setting signal.

In the technical solution, the command delay module can receive a delay setting signal from the user. The delay setting signal comprises a delay duration for setting, so that the user can manually set the delay duration for transmitting the position command signal to the position controller.

Specifically, the input end of the command delay module is configured to receive the delay setting signal. Before controlling the electric motor via the servo control system, the user sets the delay duration for transmitting the position command signal to the position controller by sending the delay setting signal to the command delay module. After the servo control system starts to control the operation of the electric motor, the command delay module within the servo control system transmits the position command signal to the position controller in a delayed manner based on a preset delay duration.

In the technical solution of the present application, users can manually set a corresponding delay duration for the command delay module according to actual conditions, so that users can more flexibly set the delay duration of the delayed transmission for the position command signal by the command delay module.

In any of the above technical solutions, four functions are provided in the command delay module, and the four functions are respectively Delay_Initial(), Delay_SetDelayTime(), Delay_Write(), and Delay_Read(). A program calls Delay_Initial() to initialize the delay module, and calls Delay_SetDelayTime() to set a delay duration t, and then sequentially calls Delay_Write() to write a latest position command value to a buffer, and calls Delay_Read() to read a position command value after the delay duration t from the buffer.

According to the second aspect of the present application, a servo control system is provided, comprising: a command interpolation module for receiving a position command signal; a command delay module connected to the command interpolation module and determining a delay duration corresponding to the position command signal when receiving the position command signal transmitted by the command interpolation module; a position controller connected to the command delay module and configured to receive the position command signal transmitted by the command delay module in a delayed manner; a velocity command determination module connected to the command interpolation module and configured to determine a velocity feedforward command signal based on the position command signal; and a velocity controller connected to the velocity command determination module and configured to receive the velocity feedforward command signal.

The servo control system defined by the present application is configured to drive a robotic arm of a robot. The robotic arm comprises multiple joint axes, each joint axis is driven by an electric motor, and the operation of the electric motor is driven by the servo control system. In a process of controlling the motion of the robotic arm, in order to improve the tracking accuracy of the robotic arm and reduce position overshoot, the motion of the robotic arm is controlled by means of velocity feedforward.

Wherein, the servo control system comprises the command interpolation module, the command delay module, the position controller, the velocity command determination module, and the velocity controller. The command interpolation module can receive a position command signal sent by a motion controller and sends the position command signal to the command delay module to perform delay processing on the position command signal. The command interpolation module transmits the position command signal to the velocity command determination module, and the velocity command determination module can perform differential processing based on the position command signal to obtain the velocity feedforward command signal. The velocity command determination module transmits the velocity feedforward command signal to the velocity controller, the command delay module transmits the position command signal to the position controller in a delayed manner, so that the moment when the velocity controller receives the velocity feedforward command signal is close to the moment when the position controller receives the position command signal, thereby reducing the phase difference between the position command signal and the velocity feedforward command signal.

In the technical solution, delay processing is performed on the position command signal via the command delay module, thereby reducing the phase difference between the velocity feedforward command signal and the position command signal. It should be noted that the velocity command determination module performs differential processing on the position command signal, and transmits the velocity feedforward command signal obtained from differential processing to the velocity controller after filtering, that is, there is a certain delay in transmitting the velocity feedforward command signal to the velocity controller.

In the technical solution of the present application, by adding a command delay module in the servo control system, after controlling the command delay module to perform delay processing on the position command signal, the position command signal is transmitted to the position controller, and thus the phase difference between the position command signal and the velocity feedforward command signal is reduced, and suppressing overshoot and enhancing the accuracy of controlling the trajectory of a robot are achieved in the case that the velocity feedforward gain is 100%.

In any of the above technical solutions, the velocity command determination module comprises a velocity feedforward command calculator connected to the command interpolation module and configured to process the position command signal to obtain the velocity feedforward command signal.

In the technical solution, the velocity command determination module comprises the velocity feedforward command calculator. The velocity feedforward command calculator is capable of calculating the velocity feedforward command signal based on the position command signal sent by the motion controller, thereby enabling the servo control system to perform velocity feedforward control on the electric motor.

Specifically, in the process of determining the velocity feedforward command signal, the velocity feedforward command calculator performs a differential calculation on the position command signal based on a velocity feedforward gain, and then the velocity feedforward command signal can be obtained. It should be noted that the value range of the velocity feedforward gain is from 0% to 100%. Users can set the specific value of the velocity feedforward gain before controlling an electronic device via the servo control system. The velocity feedforward command calculator calculates the velocity feedforward command signal based on the velocity feedforward gain and the position command signal.

In the technical solution of the present application, the velocity feedforward command calculator is provided within the velocity command determination module. After the motion controller transmits the position command signal to the command interpolation module, the command interpolation module inputs the position command signal into the velocity feedforward command calculator of the velocity command determination module. Differential processing is performed on the position command signal via the velocity feedforward command calculator to obtain a corresponding velocity feedforward control signal, thereby achieving accurately determining the velocity feedforward command signal which performs velocity feedforward control on the electric motor, ensuring the accuracy of the control on the electric motor and thus enhancing the precision of the motion trajectory of a robot.

In any of the above technical solutions, the velocity command determination module further comprises a filter connected to the velocity feedforward command calculator and configured to perform low-pass filtering on the velocity feedforward command signal and transmit the filtered velocity feedforward command signal to the velocity controller.

In the technical solution, the velocity command determination module further comprises a filter, and the filter can be a low-pass filter. After low-pass filtering is performed on the velocity feedforward command signal generated by the velocity command determination module via the low-pass filter, the velocity feedforward command signal is transmitted to the velocity controller. That is, the high-frequency noise components in the velocity feedforward command signal can be removed via the filter, so that the velocity feedforward command signal is relatively smooth.

Specifically, the velocity command determination module comprises the filter and the velocity feedforward command calculator. The output end of the velocity feedforward command calculator is connected to the input end of the filter, and the output end of the filter is connected to the velocity controller. The velocity feedforward command calculator is a signal input end of the velocity command determination module. That is, the command interpolation module transmits the position command signal to the velocity feedforward command calculator for differential calculation to obtain the velocity feedforward command signal. The velocity feedforward command signal is filtered by the filter, and then transmitted to the velocity controller.

In the technical solution of the present application, since the velocity feedforward command signal is obtained by differentiating the position command signal via the velocity feedforward command calculator, the velocity feedforward command signal has significant high-frequency noise components and is not smooth enough. By performing low-pass filtering on the velocity feedforward command signal via the filter, the high-frequency noise components in the velocity feedforward command signal can be removed, so that the velocity feedforward command signal is relatively smooth, and the accuracy of the velocity feedforward control of the electric motor is further improved.

In any of the above technical solutions, the servo control system further comprises: a current controller connected to the velocity controller and configured to output a current command signal; a power conversion module connected to the current controller and the electric motor and configured to control the operating power of the electric motor based on the position command signal, the velocity feedforward command signal and the current command signal.

In the technical solution, the servo control system further comprises the current controller and the power conversion module. The current controller is configured to control a current loop of the electric motor, and the power conversion module is connected to the current controller.

Specifically, the position controller, the velocity controller, the current controller and the power conversion module are interconnected. The position controller can adjust the operating power of the electric motor via the power conversion module based on the position command signal. The velocity controller can adjust the operating power of the electric motor via the power conversion module based on the velocity command signal and the velocity feedforward command signal. The current controller can adjust the operating power of the electric motor via the power conversion module based on the velocity command signal.

In the technical solution of the present application, the current controller is provided in the servo control system, so that the servo control system can control the current loop of the electric motor, and the operating power of the electric motor is adjusted via the power conversion module, and then stable control over the operation of the electric motor is achieved.

In any of the above technical solutions, the servo control system comprises the command interpolation module, the command delay module, the velocity command determination module, the position controller, the velocity controller, the current controller and the power conversion module. Wherein, the velocity command determination module comprises the velocity feedforward command calculator and the filter.

In the technical solution, the servo control system is connected to the motion controller of the robot. The motion controller transmits the position command signal to the command interpolation module, and the command interpolation module transmits the position command signal to the command delay module and the velocity command determination module, respectively. The velocity command determination module calculates the velocity feedforward command signal via the velocity feedforward command calculator based on the position command signal and transmits the velocity feedforward command signal via the filter to the velocity controller. The command delay module processes the position command signal in a delayed manner and then transmits it to the position controller. Thus, the phase difference between the velocity feedforward command signal and the position command signal is reduced. When the user sets the velocity feedforward gain to be 100%, the overshoot can be reduced and the accuracy of the control over the operation of the robot by the servo control system is enhanced.

The third aspect of the present application provides a servo control apparatus for a servo control system. The servo control system comprises a command interpolation module, a velocity command determination module, a command delay module, a position controller and a velocity controller. The servo control apparatus comprises: a determination module configured to determine a delay duration corresponding to a position command signal via the command delay module when the command interpolation module receives a position command signal, and the determination module is configured to determine a velocity feedforward command signal based on the position command signal via the velocity command determination module; a transmission module configured to transmit the velocity feedforward command signal to the velocity controller via the velocity command determination module, and the transmission module is configured to transmit the position command signal to the position controller in a delayed manner based on the delay duration via the command delay module.

**In** the technical solution of the present application, by adding a command delay module in the servo control system, after controlling the command delay module to perform delay processing on the position command signal, the position command signal is transmitted to the position controller, and thus the phase difference between the position command signal and the velocity feedforward command signal is reduced, and suppressing overshoot and enhancing the accuracy of controlling the trajectory of a robot are achieved in the case that the velocity feedforward gain is 100%.

According to the fourth aspect of the present application, a servo control apparatus is provided, comprising: a memory storing programs or instructions; and a processor which executes the programs or instructions stored in the memory to implement the steps of the servo control method in any of the technical solutions of the first aspect. Therefore, the servo control apparatus has all the beneficial technical effects of the servo control method in any of the technical solutions of the first aspect, which will not be repeated herein.

According to the fifth aspect of the present application, a computer-readable storage medium is provided. The computer-readable storage medium stores programs or instructions therein, when the programs or instructions are executed by a processor, the steps of the servo control method in any of the technical solutions in the first aspect are implemented. Therefore, the computer-readable storage medium has all the beneficial technical effects of the servo control method in any of the technical solutions in the first aspect, which will not be repeated here.

According to the sixth aspect of the present application, a robot is provided, comprising: the servo control system defined in the second aspect above, or the servo control apparatus defined in the third aspect or the fourth aspect above, or the computer-readable storage medium defined in the fifth aspect above. Therefore, the robot has all the beneficial technical effects of the servo control apparatus in the third aspect or the fourth aspect, or the computer-readable storage medium defined in the fifth aspect, which will not be repeated herein.

**In** any of the above technical solutions, the robot further comprises an electric motor, the electric motor is connected to the servo control system, and the servo control system is configured to control the electric motor.

**In** the technical solution, the electric motor is a driving structure of the robot. The operation of the electric motor can be controlled via the servo control system, and thus the operation of the robot is controlled via the servo control system.

In any of the above technical solutions, the robot further comprises a robotic arm, which is connected to the output end of the electric motor.

In the technical solution, the robotic arm of a robot comprises multiple joint axes, each joint axis is driven by an electric motor, and the operation of the electric motor is driven via the servo control system. During the process of controlling the movement of the robotic arm, in order to improve the tracking accuracy of the robotic arm and reduce position overshoot, the movement of the robotic arm is controlled via a velocity feedforward method.

The additional aspects and advantages of the present application will become apparent in the following description, or be learned via the practice of the present application.

**BRIEF DESCRIPTION OF THE DRAWINGS**

The above and/or additional aspects and advantages of the present application will become apparent and easily understandable from the description of the embodiments in combination with the accompanying drawings, wherein,

FIG. 1 is a first schematic flow chart of a servo control method according to an embodiment of the present application;

FIG. 2 is a curve diagram of a velocity feedforward command and a position error according to an embodiment of the present application;

FIG. 3 is a second schematic flow chart of a servo control method according to an embodiment of the present application;

FIG. 4 is a third schematic flow chart of a servo control method according to an embodiment of the present application;

FIG. 5 is a fourth schematic flow chart of a servo control method according to an embodiment of the present application;

FIG. 6 is a block diagram of the structure of a servo control system according to an embodiment of the present application;

FIG. 7 is a block diagram of the structure of a servo control apparatus according to an embodiment of the present application;

FIG. 8 is a block diagram of the structure of a servo control apparatus according to an embodiment of the present application; and

FIG. 9 is a block diagram of the structure of a robot according to an embodiment of the present application.

**DETAILED DESCRIPTION OF THE APPLICATION**

To more clearly understand the above aspects, features and advantages of the present application, the present application will be further detailed hereinafter in combination with the accompanying drawings and embodiments. It should be noted that the embodiments and the features in the embodiments can be combined with each other in the case of no conflict.

Many details are illustrated in the following description for the convenience of a thorough understanding to the present application, but the present application can further be implemented using other embodiments other than these described herein. Therefore, the protection scope of the present application is not limited to the specific embodiments disclosed in the following text.

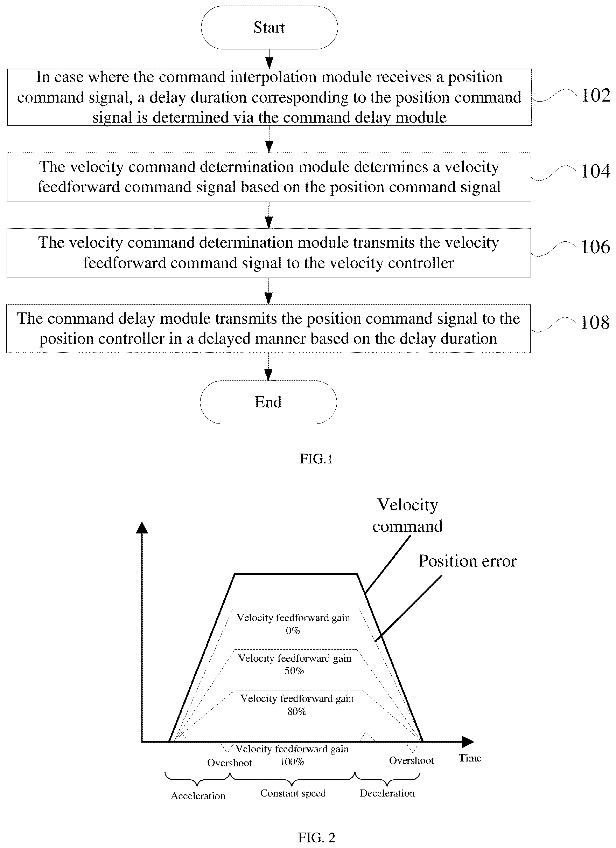

A servo control method, apparatus and system, a robot, and a computer-readable storage medium provided in some embodiments of the present application are described in the following text by referring to FIG. 1 to FIG. 9.

According to an embodiment of the present application, as shown in FIG. 1, a servo control method is provided, and is executed by a servo control system; the servo control system comprises a command interpolation module, a velocity command determination module, a command delay module, a position controller, and a velocity controller, and the servo control method comprises:

Step 102: when the command interpolation module receives a position command signal, a delay duration corresponding to the position command signal is determined via the command delay module;

Step 104: the velocity command determination module determines a velocity feedforward command signal based on the position command signal;

Step 106: the velocity command determination module transmits the velocity feedforward command signal to the velocity controller; and

Step 108: the command delay module transmits the position command signal to the position controller in a delayed manner based on the delay duration.

The servo control method defined in the present application is applied to a servo control system. The servo control system is configured to drive a robotic arm of a robot. The robotic arm comprises multiple joint axes, each joint axis is driven by an electric motor, and the operation of the electric motor is driven via the servo control system. During the process of controlling the movement of the robotic arm, in order to improve the tracking accuracy of the robotic arm and reduce position overshoot, the movement of the robotic arm is controlled via a velocity feedforward method.

Wherein, the servo control system comprises a command interpolation module, a command delay module, a position controller, a velocity command determination module, and a velocity controller. The command interpolation module can receive the position command signal sent by a motion controller and send the position command signal to the command delay module for delay processing, the command interpolation module transmits the position command signal to the velocity command determination module, and the velocity command determination module can perform differential processing based on the position command signal to obtain the velocity feedforward command signal. The velocity command determination module transmits the velocity feedforward command signal to the velocity controller, the command delay module transmits the position command signal to the position controller in a delayed manner, so that the moment when the velocity controller receives the velocity feedforward command signal is close to the moment when the position controller receives the position command signal, thereby reducing the phase difference between the position command signal and the velocity feedforward command signal.

In the embodiment, delay processing is performed on the position command signal via the command delay module, thereby reducing the phase difference between the velocity feedforward command signal and the position command signal. It should be noted that the velocity command determination module performs differential processing on the position command signal, and transmits the velocity feedforward command signal obtained from differential processing to the velocity controller after filtering, that is, there is a certain delay in transmitting the velocity feedforward command signal to the velocity controller.

As shown in FIG. 2, exemplarily, a user can set the velocity feedforward gain to be 0% to 100%, 0% indicates disabling the velocity feedforward command signal, and 100% indicates fully enabling the velocity feedforward function. Evidently, when the command delay module is not used and the velocity feedforward gain is 100%, the position error during the constant-speed phase is reduced to near 0%. Due to the phase difference between the position command signal and the velocity feedforward command signal, overshoot occurs during acceleration and deceleration phases, i.e., the actual position is ahead of the command position. Delay processing is performed on the position command signal via the command delay module, the phase difference between the position command signal and the velocity feedforward command signal is reduced, so that overshoot is effectively suppressed when the velocity feedforward gain is 100%.

In the embodiment of the present application, by adding a command delay module in the servo control system, after controlling the command delay module to perform delay processing on the position command signal, the position command signal is transmitted to the position controller, and thus the phase difference between the position command signal and the velocity feedforward command signal is reduced, and suppressing overshoot and enhancing the accuracy of controlling the trajectory of a robot are achieved in the case that the velocity feedforward gain is 100%.

In any of the above embodiments, the velocity command determination module comprises a velocity feedforward command calculator; the velocity command determination module determines the velocity feedforward command signal based on the position command signal, which comprises: processing the position command signal via the velocity feedforward command calculator to obtain the velocity feedforward command signal.

In the embodiment, the velocity command determination module comprises the velocity feedforward command calculator. The velocity feedforward command calculator is capable of calculating the velocity feedforward command signal based on the position command signal sent by the motion controller, thereby enabling the servo control system to perform velocity feedforward control on the electric motor.

Specifically, in the process of determining the velocity feedforward command signal, the velocity feedforward command calculator performs a differential calculation on the position command signal based on a velocity feedforward gain, and then the velocity feedforward command signal can be obtained. It should be noted that the value range of the velocity feedforward gain is from 0% to 100%. Users can set the specific value of the velocity feedforward gain before controlling an electronic device via the servo control system. The velocity feedforward command calculator calculates the velocity feedforward command signal based on the velocity feedforward gain and the position command signal.

In the embodiment of the present application, the velocity feedforward command calculator is provided within the velocity command determination module. After the motion controller transmits the position command signal to the command interpolation module, the command interpolation module inputs the position command signal into the velocity feedforward command calculator of the velocity command determination module. Differential processing is performed on the position command signal via the velocity feedforward command calculator to obtain a corresponding velocity feedforward control signal, thereby achieving accurately determining the velocity feedforward command signal which performs velocity feedforward control on the electric motor, ensuring the accuracy of the control on the electric motor and thus enhancing the precision of the motion trajectory of a robot.

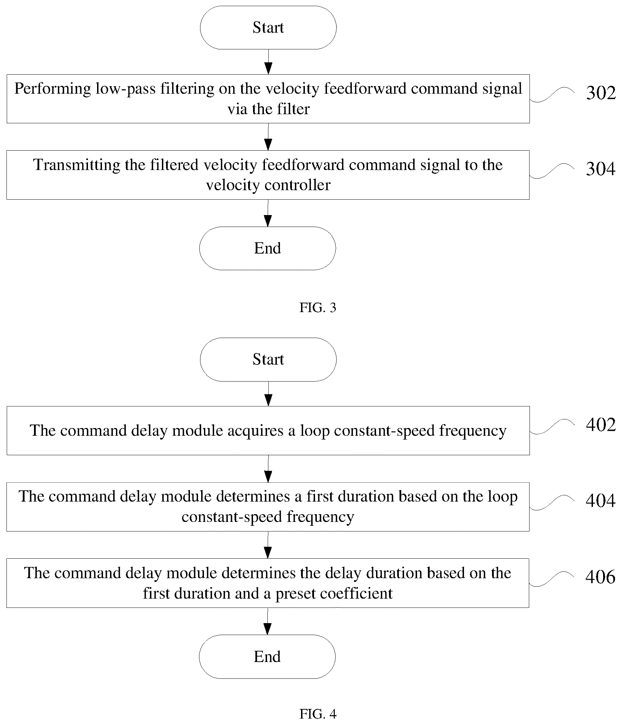

As shown in FIG. 3, in any of the above embodiments, the velocity command determination module further comprises a filter. The input end of the filter is configured to receive the velocity feedforward command signal, and the output end of the filter is connected to the velocity controller; the velocity command determination module transmits the velocity feedforward command signal to the velocity controller, which comprises:

Step 302: performing low-pass filtering on the velocity feedforward command signal via the filter, and

Step 304: transmitting the filtered velocity feedforward command signal to the velocity controller.

In the embodiment, the velocity command determination module further comprises a filter, and the filter can be a low-pass filter. After low-pass filtering is performed on the velocity feedforward command signal generated by the velocity command determination module via the low-pass filter, the velocity feedforward command signal is transmitted to the velocity controller. That is, the high-frequency noise components in the velocity feedforward command signal can be removed via the filter, so that the velocity feedforward command signal is relatively smooth.

Specifically, the velocity command determination module comprises the filter and the velocity feedforward command calculator. The output end of the velocity feedforward command calculator is connected to the input end of the filter, and the output end of the filter is connected to the velocity controller. The velocity feedforward command calculator is a signal input end of the velocity command determination module. That is, the command interpolation module transmits the position command signal to the velocity feedforward command calculator for differential calculation to obtain the velocity feedforward command signal. The velocity feedforward command signal is filtered by the filter, and then transmitted to the velocity controller.

In the embodiment of the present application, since the velocity feedforward command signal is obtained by differentiating the position command signal via the velocity feedforward command calculator, the velocity feedforward command signal has significant high-frequency noise components and is not smooth enough. By performing low-pass filtering on the velocity feedforward command signal via the filter, the high-frequency noise components in the velocity feedforward command signal can be removed, so that the velocity feedforward command signal is relatively smooth, and the accuracy of the velocity feedforward control of the electric motor is further improved.

As shown in FIG. 4, in any of the above embodiments, when the command interpolation module receives the position command signal, determining the delay duration corresponding to the position command signal via the command delay module comprises:

Step 402: the command delay module acquires a constant-speed loop frequency;

Step 404: the command delay module determines a first duration based on the constant-speed loop frequency; and

Step 406: the command delay module determines the delay duration based on the first duration and a preset coefficient.

In the embodiment, the command delay module can determine the first duration based on the constant-speed loop frequency of the electric motor. The command delay module determines the delay duration for the delayed transmission of the position command signal using the preset coefficient. The constant-speed loop frequency refers to a frequency within a control loop of the electric motor at which the electric motor operates at a constant speed.

Exemplarily, the delay duration is calculated using the following equation:

$$t = n \times deltaT;$$

Wherein, *t* is the delay duration, *n* is a preset coefficient, and deltaT is the first time duration. *n* can be 0, 1, 2, 3... 32. The command delay module sets deltaT based on the constant-speed loop frequency, for example, deltaT = 62.5us, 125us, 250us, etc.

In the embodiment of the present application, the servo control system can automatically set the delay duration for the delayed transmission of the position command signal based on the constant-speed loop frequency of the electric motor and the preset coefficient, and control the delayed transmission of the position command signal via the delay duration, and further reduce the phase difference between the position command signal and the velocity feedforward command signal.

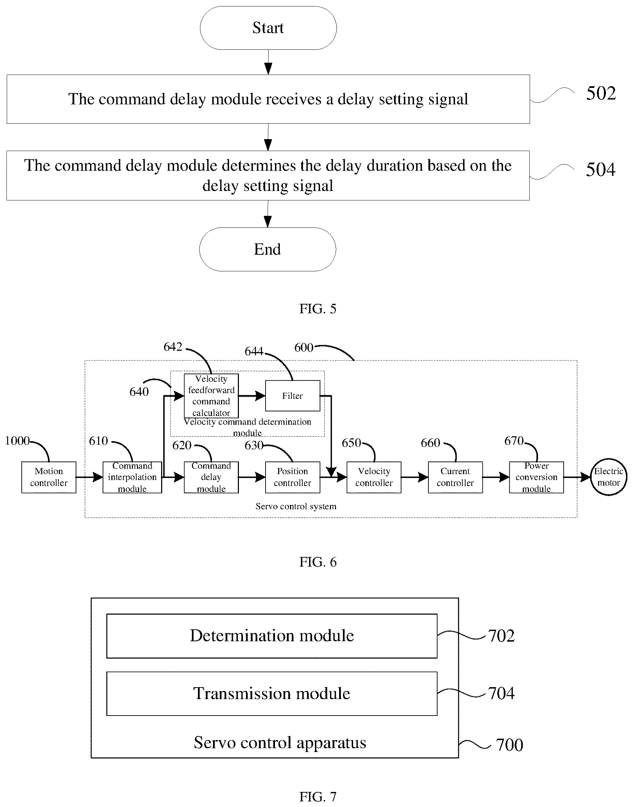

As shown in FIG. 5, in any of the above embodiments, when the position command signal is received, determining the delay duration corresponding to the position command signal via the command delay module comprises:

Step 502: the command delay module receives a delay setting signal; and

Step 504: the command delay module determines the delay duration based on the delay setting signal.

In the embodiment, the command delay module can receive a delay setting signal from the user. The delay setting signal comprises a delay duration for setting, so that the user can manually set the delay duration for transmitting the position command signal to the position controller.

Specifically, the input end of the command delay module is configured to receive the delay setting signal. Before controlling the electric motor via the servo control system, the user sets the delay duration for transmitting the position command signal to the position controller by sending the delay setting signal to the command delay module. After the servo control system starts to control the operation of the electric motor, the command delay module within the servo control system transmits the position command signal to the position controller in a delayed manner based on a preset delay duration.

Exemplarily, the user transmits a delay setting signal to the command interpolation module, the command delay module reads a second time duration corresponding to the delay setting signal from the command interpolation module, and the second time duration is determined to be the delay duration.

Exemplarily, the user directly transmits the delay setting signal to the command delay module, and the command delay module parses the delay setting signal, thereby obtaining the corresponding delay duration.

In the embodiment of the present application, users can manually set a corresponding delay duration for the command delay module according to actual conditions, so that users can more flexibly set the time delay of the delayed transmission for the position command signal by the command delay module.

In any of the above embodiments, four functions are provided in the command delay module, and the four functions are respectively Delay_Initial(), Delay_SetDelayTime(), Delay_Write(), and Delay_Read(). A program calls Delay_Initial() to initialize the delay module, and calls Delay_SetDelayTime() to set a delay duration t, and then sequentially calls Delay_Write() to write a latest position command value to a buffer, and calls Delay_Read() to read a position command value after the delay duration t from the buffer.

According to an embodiment of the present application, as shown in FIG. 6, a servo control system 600 is provided, comprising:

a command interpolation module 610, for receiving a position command signal;

a command delay module 620, connected to the command interpolation module 610 and determining a delay duration corresponding to the position command signal when receiving the position command signal transmitted by the command interpolation module 610;

a position controller 630, connected to the command delay module 620 and configured to receive the position command signal transmitted by the command delay module 620 in a delayed manner;

a velocity command determination module 640, connected to the command interpolation module 610 and configured to determine a velocity feedforward command signal based on the position command signal; and

a velocity controller 650, connected to the velocity command determination module 640 and configured to receive the velocity feedforward command signal.

The servo control system defined by the present application is configured to drive a robotic arm of a robot. The robotic arm comprises multiple joint axes, each joint axis is driven by an electric motor, and the operation of the electric motor is driven by the servo control system 600. In a process of controlling the motion of the robotic arm, in order to improve the tracking accuracy of the robotic arm and reduce position overshoot, the motion of the robotic arm is controlled by means of velocity feedforward.

Wherein, the servo control system 600 comprises the command interpolation module 610, the command delay module 620, the position controller 630, the velocity command determination module 640, and the velocity controller 650. The command interpolation module 610 can receive a position command signal sent by a motion controller 1000 and sends the position command signal to the command delay module 620 to perform delay processing on the position command signal. The command interpolation module 610 transmits the position command signal to the velocity command determination module 640, and the velocity command determination module 640 can perform differential processing based on the position command signal to obtain the velocity feedforward command signal. The velocity command determination module 640 transmits the velocity feedforward command signal to the velocity controller 650, the command delay module 620 transmits the position command signal to the position controller 630 in a delayed manner, so that the moment when the velocity controller 650 receives the velocity feedforward command signal is close to the moment when the position controller 630 receives the position command signal, thereby reducing the phase difference between the position command signal and the velocity feedforward command signal.

In the embodiment of the present application, by adding the command delay module 620 in the servo control system 600, after controlling the command delay module 620 to perform delay processing on the position command signal, the position command signal is transmitted to the position controller 630, and thus the phase difference between the position command signal and the velocity feedforward command signal is reduced, and suppressing overshoot and enhancing the accuracy of controlling the trajectory of a robot are achieved in the case that the velocity feedforward gain is 100%.

In any of the above embodiments, the velocity command determination module 640 comprises a velocity feedforward command calculator 642 connected to the command interpolation module 610 and configured to process the position command signal to obtain the velocity feedforward command signal.

In the embodiment, the velocity command determination module 640 comprises the velocity feedforward command calculator 642. The velocity feedforward command calculator 642 is capable of calculating the velocity feedforward command signal based on the position command signal sent by the motion controller 1000, thereby enabling the servo control system 600 to perform velocity feedforward control on the electric motor.

Specifically, in the process of determining the velocity feedforward command signal, the velocity feedforward command calculator 642 performs a differential calculation on the position command signal based on a velocity feedforward gain, and then the velocity feedforward command signal can be obtained. It should be noted that the value range of the velocity feedforward gain is from 0% to 100%. Users can set the specific value of the velocity feedforward gain before controlling an electronic device via the servo control system 600. The velocity feedforward command calculator 642 calculates the velocity feedforward command signal based on the velocity feedforward gain and the position command signal.

In the embodiment of the present application, the velocity feedforward command calculator 642 is provided within the velocity command determination module 640. After the motion controller 1000 transmits the position command signal to the command interpolation module 610, the command interpolation module 610 inputs the position command signal into the velocity feedforward command calculator 642 of the velocity command determination module 640. Differential processing is performed on the position command signal via the velocity feedforward command calculator 642 to obtain a corresponding velocity feedforward control signal, thereby achieving accurately determining the velocity feedforward command signal which performs velocity feedforward control on the electric motor, ensuring the accuracy of the control on the electric motor and thus enhancing the precision of the motion trajectory of a robot.

In any of the above embodiments, the velocity command determination module 640 further comprises a filter 644 connected to the velocity feedforward command calculator 642 and configured to perform low-pass filtering on the velocity feedforward command signal and transmit the filtered velocity feedforward command signal to the velocity controller 650.

In the embodiment, the velocity command determination module 640 further comprises a filter 644, and the filter 644 can be a low-pass filter. After low-pass filtering is performed on the velocity feedforward command signal generated by the velocity command determination module 640 via the low-pass filter, the velocity feedforward command signal is transmitted to the velocity controller 650. That is, the high-frequency noise components in the velocity feedforward command signal can be removed via the filter 644, so that the velocity feedforward command signal is relatively smooth.

Specifically, the velocity command determination module 640 comprises the filter 644 and the velocity feedforward command calculator 642. The output end of the velocity feedforward command calculator 642 is connected to the input end of the filter 644, and the output end of the filter 644 is connected to the velocity controller 650. The velocity feedforward command calculator 642 is a signal input end of the velocity command determination module 640. That is, the command interpolation module 610 transmits the position command signal to the velocity feedforward command calculator 642 for differential calculation to obtain the velocity feedforward command signal. The velocity feedforward command signal is filtered by the filter 644, and then transmitted to the velocity controller 650.

In the embodiment of the present application, since the velocity feedforward command signal is obtained by differentiating the position command signal via the velocity feedforward command calculator, the velocity feedforward command signal has significant high-frequency noise components and is not smooth enough. By performing low-pass filtering on the velocity feedforward command signal via the filter 644, the high-frequency noise components in the velocity feedforward command signal can be removed, so that the velocity feedforward command signal is relatively smooth, and the accuracy of the velocity feedforward control of the electric motor is further improved.

In any of the above embodiments, the servo control system 600 further comprises: a current controller 660 connected to the velocity controller 650 and configured to output a current command signal; a power conversion module 670 connected to the current controller 660 and the electric motor and configured to control the operating power of the electric motor based on the position command signal, the velocity feedforward command signal and the current command signal.

In the embodiment, the servo control system 600 further comprises the current controller 660 and the power conversion module 670. The current controller 660 is configured to control a current loop of the electric motor, and the power conversion module 670 is connected to the current controller 660.

Specifically, the position controller 630, the velocity controller 650, the current controller 660 and the power conversion module 670 are interconnected. The position controller 630 can adjust the operating power of the electric motor via the power conversion module 670 based on the position command signal. The velocity controller 650 can adjust the operating power of the electric motor via the power conversion module 670 based on the velocity command signal and the velocity feedforward command signal. The current controller 660 can adjust the operating power of the electric motor via the power conversion module 670 based on the velocity command signal.

In the embodiment of the present application, the current controller 660 is provided in the servo control system 600, so that the servo control system 600 can control the current loop of the electric motor, and the operating power of the electric motor is adjusted via the power conversion module 670, and then stable control over the operation of the electric motor is achieved.

In any of the above embodiments, the servo control system 600 comprises the command interpolation module 610, the command delay module 620, the velocity command determination module 640, the position controller 630, the velocity controller 650, the current controller 660 and the power conversion module 670. Wherein, the velocity command determination module 640 comprises the velocity feedforward command calculator 642 and the filter 644.

In the embodiment, the servo control system 600 is connected to the motion controller 1000 of the robot. The motion controller 1000 transmits the position command signal to the command interpolation module 610, and the command interpolation module 610 transmits the position command signal to the command delay module 620 and the velocity command determination module 640, respectively. The velocity command determination module 640 calculates the velocity feedforward command signal via the velocity feedforward command calculator 642 based on the position command signal and transmits the velocity feedforward command signal via the filter 644 to the velocity controller 650. The command delay module 620 processes the position command signal in a delayed manner and then transmits it to the position controller 630. Thus, the phase difference between the velocity feedforward command signal and the position command signal is reduced. When the user sets the velocity feedforward gain to be 100%, the overshoot can be reduced and the accuracy of the control over the operation of the robot by the servo control system 600 is enhanced.

In an embodiment of the present application, as shown in FIG. 7, a servo control apparatus 700 for a servo control system is provided. The servo control system comprises a command interpolation module, a velocity command determination module, a command delay module, a position controller and a velocity controller. The servo control apparatus comprises:

a determination module 702, configured to determine a delay duration corresponding to a position command signal via the command delay module when the command interpolation module receives a position command signal, and

the determination module 702, configured to determine a velocity feedforward command signal based on the position command signal via the velocity command determination module;

a transmission module 704, configured to transmit the velocity feedforward command signal to the velocity controller via the velocity command determination module, and

the transmission module 704, configured to transmit the position command signal to the position controller in a delayed manner based on the delay duration via the command delay module.

In the technical solution of the present application, by adding a command delay module in the servo control system, after controlling the command delay module to perform delay processing on the position command signal, the position command signal is transmitted to the position controller, and thus the phase difference between the position command signal and the velocity feedforward command signal is reduced, and suppressing overshoot and enhancing the accuracy of controlling the trajectory of a robot are achieved in the case that the velocity feedforward gain is 100%.

In any of the above embodiments, the velocity command determination module comprises a velocity feedforward command calculator;

the servo control apparatus 700 further comprises:

a processing module configured to process the position command signal via the velocity feedforward command calculator to obtain the velocity feedforward command signal.

In the embodiment of the present application, the velocity feedforward command calculator is provided in the velocity command determination module. After the motion controller transmits the position command signal to the command interpolation module, the command interpolation module inputs the position command signal to the velocity feedforward command calculator in the velocity command determination module. The velocity feedforward command calculator performs differential processing on the position command signal to obtain the corresponding velocity feedforward control signal, thereby achieving accurately determining the velocity feedforward command signal which performs velocity feedforward control on the electric motor, ensuring the accuracy of the control on the electric motor and thus enhancing the precision of the motion trajectory of a robot.

In any of the above embodiments, the velocity command determination module further comprises a filter. The input end of the filter is configured to receive the velocity feedforward command signal, and the output end of the filter is connected to the velocity controller;

a transmission module 704, configured to perform low-pass filtering on the velocity feedforward command signal via the filter, and transmit the filtered velocity feedforward command signal to the velocity controller.

In the embodiment of the present application, since the velocity feedforward command signal is obtained by differentiating the position command signal via the velocity feedforward command calculator, the velocity feedforward command signal has significant high-frequency noise components and is not smooth enough. By performing low-pass filtering on the velocity feedforward command signal via the filter, the high-frequency noise components in the velocity feedforward command signal can be removed, so that the velocity feedforward command signal is relatively smooth, and the accuracy of the velocity feedforward control of the electric motor is further improved.

In any of the above embodiments, the servo control apparatus 700 further comprises:

an acquiring module, configured to command the delay module to acquire a constant-speed loop frequency;

a determination module 702, configured to the command delay module to determine a first duration based on the constant-speed loop frequency, and

a determination module 702, configured to the command delay module to determine the delay duration based on the first duration and a preset coefficient.

In the embodiment of the present application, the servo control system can automatically set the delay duration for the delayed transmission of the position command signal based on the constant-speed loop frequency of the electric motor and the preset coefficient, and controls the delayed transmission of the position command signal via the delay duration, and further reduces the phase difference between the position command signal and the velocity feedforward command signal.

In any of the above embodiments, the servo control apparatus 700 further comprises:

a receiving module, configured to the command delay module to receive a delay setting signal, and

a determination module 702, configured to the command delay module to determine the delay duration based on the delay setting signal.

In the embodiment of the present application, users can manually set a corresponding delay duration for the command delay module according to actual conditions, so that users can more flexibly set the time delay of the delayed transmission for the position command signal by the command delay module.

According to the fourth aspect of the present application, a servo control apparatus 700 is provided, comprising: a memory storing programs or instructions; and a processor which executes the programs or instructions stored in the memory to achieve the steps of the servo control method in any of technical solutions of the first aspect. Therefore, the servo control apparatus 700 has all the beneficial technical effects of the servo control method in any of the technical solutions of the first aspect, which will not be repeated herein.

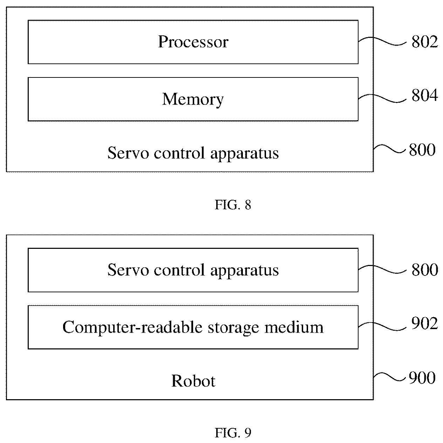

In an embodiment according to the present application, as shown in FIG. 8, a servo control apparatus 800 is provided, comprising a processor 802 and a memory 804, and programs or instructions are stored in the memory 804; the processor 802 executes the programs or instructions stored in the memory 804 to achieve the steps of the servo control method in any of the technical solutions in the first aspect. Therefore, the servo control apparatus 800 has all the beneficial technical effects of the servo control method in any of the technical solutions in the first aspect, which will not be repeated here.

In an embodiment of the present application, a computer-readable storage medium is provided. The computer-readable storage medium stores programs or instructions therein, when the programs and instructions are executed by a processor, the steps of the servo control method in any of the technical solutions in the first aspect are achieved. Therefore, the computer-readable storage medium has all the beneficial technical effects of the servo control method in any of the technical solutions in the first aspect, which will not be repeated here.

In an embodiment of the present application, as shown in FIG. 9, a robot 900 is provided, comprising: the servo control apparatus 800 defined in any of the above embodiments, or the computer-readable storage medium 902 defined in any of the above embodiments. Therefore, the robot has all the beneficial technical effects of the servo control apparatus 800 in any of the above embodiments, or the computer-readable storage medium 902 in any of the above embodiments.

It needs to be explained that in the claims, the description and the accompanying drawings of the present application, the term of "multiple" indicates two or more than two, unless otherwise explicitly specified or defined. The orientation or position relations indicated by the terms of "upper", "lower" and the like are based on the orientation or position relations shown in the accompanying drawings, and they are just intended to conveniently describe the present application and simplify the description, and are not intended to indicate or imply that the devices or units as indicated should have specific orientations or should be configured or operated in specific orientations, and then should not be construed as limitations to the present application. The terms of "connect", "mount", "fix" and the like should be understood in a broad sense, for example, the term "connect" can be a fixed connection between multiple objects and can further be a detachable connection between multiple objects, or an integral connection, and can be a direct connection between multiple objects, or an indirect connection between multiple objects via an intermediate medium. For those of ordinary skills in the art, they may understand the specific meanings of the above-mentioned terms in the present application according to specific circumstances.

In the claims, the description and the accompanying drawings of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the claims, description and accompanying drawings of the present application, the illustrative expression of the above terms may not indicate the same embodiment or example. In addition, the specific features, structures, materials or characteristics as described may be combined with each other in an appropriate method in any one or more of the embodiments or examples.

The above-mentioned are merely some embodiments of the present application and are not intended to limit the present application, and for one skilled in the art, various modifications and changes may be made to the present application. Any modifications, equivalent substitutions, improvements and so on made within the principle of the present application should be covered within the scope of protection of the present application.

**Claims**

1.  A servo control method, executed by a servo control system, the servo control system comprising a command interpolation module, a velocity command determination module, a command delay module, a position controller, and a velocity controller, and the servo control method comprising:

    in case where the command interpolation module receives a position command signal, determining a delay duration corresponding to the position command signal via the command delay module;
    determining, by the velocity command determination module, a velocity feedforward command signal based on the position command signal;
    transmitting, by the velocity command determination module, the velocity feedforward command signal to the velocity controller; and
    transmitting with a delay, by the command delay module, the position command signal to the position controller based on the delay duration.

2.  The servo control method according to claim 1, wherein the velocity command determination module comprises a velocity feedforward command calculator;
    the step of determining, by the velocity command determination module, a velocity feedforward command signal based on the position command signal comprises:
    processing the position command signal via the velocity feedforward command calculator to obtain the velocity feedforward command signal.

3.  The servo control method according to claim 1, wherein the velocity command determination module further comprises a filter, an input end of the filter is configured to receive the velocity feedforward command signal, and an output end of the filter is connected to the velocity controller; and
    the step of transmitting the velocity feedforward command signal to the velocity controller with the velocity command determination module comprises:
    performing low-pass filtering on the velocity feedforward command signal via the filter, and transmitting the filtered velocity feedforward command signal to the velocity controller.

4.  The servo control method according to any one of claims 1 to 3, wherein in case where the command interpolation module receives the position command signal, determining the delay duration corresponding to the position command signal via the command delay module comprises:

    acquiring a constant-speed loop frequency by the command delay module;
    determining a first duration based on the constant-speed loop frequency by the command delay module; and
    determining the delay duration based on the first duration and a preset coefficient by the command delay module.

5.  The servo control method according to any one of claims 1 to 3, wherein in case where the position command signal is received, the step of determining the delay duration corresponding to the position command signal via the command delay module comprises:

    receiving a delay setting signal by the command delay module; and
    determining the delay duration based on the delay setting signal by the command delay module.

6.  A servo control system, comprising:

a command interpolation module for receiving a position command signal;

a command delay module connected to the command interpolation module, wherein the command delay module determines a delay duration corresponding to the position command signal in case where the position command signal transmitted by the command interpolation module is received;

a position controller connected to the command delay module and configured to receive the position command signal transmitted by the command delay module in a delayed manner;

a velocity command determination module connected to the command interpolation module and configured to determine a velocity feedforward command signal based on the position command signal; and

a velocity controller connected to the velocity command determination module and configured to receive the velocity feedforward command signal.

7. The servo control system according to claim 6, wherein the velocity command determination module comprises:

a velocity feedforward command calculator connected to the command interpolation module and configured to process the position command signal to obtain the velocity feedforward command signal.

8. The servo control system according to claim 7, wherein the velocity command determination module comprises:

a filter connected to the velocity feedforward command calculator and configured to perform low-pass filtering on the velocity feedforward command signal and transmit the filtered velocity feedforward command signal to the velocity controller.

9. The servo control system according to any one of claims 6 to 8, further comprising: a current controller connected to the velocity controller and configured to output a current command signal; a power conversion module connected to the current controller and an electric motor, wherein the power conversion module is configured to control the operating power of the electric motor based on the position command signal, the velocity feedforward command signal and the current command signal.

10. A servo control apparatus for a servo control system, wherein the servo control system comprises a command interpolation module, a velocity command determination module, a command delay module, a position controller and a velocity controller, and the servo control apparatus comprises:

a determination module configured to determine a delay duration corresponding to a position command signal via the command delay module in case where the command interpolation module receives the position command signal, and the determination module is configured to determine a velocity feedforward command signal based on the position command signal via the velocity command determination module; and

a transmission module configured to transmit the velocity feedforward command signal to the velocity controller via the velocity command determination module, and

the transmission module is configured to transmit the position command signal to the position controller in a delayed manner based on the delay duration via the command delay module.

11. A servo control apparatus, comprising:

a memory storing programs or instructions therein; and

a processor configured to execute the programs or instructions stored in the memory to achieve the steps of the servo control method according to any one of claims 1 to 5.

12. A computer-readable storage medium storing programs or instructions therein, wherein in case where the programs and instructions are executed by a processor, the steps of the servo control method according to any one of claims 1 to 5 are achieved.

13. A robot, comprising:

the servo control system according to any one of claims 6 to 9; or

the servo control apparatus according to claim 10 or 11; or

the computer-readable storage medium according to claim 12.

14. The robot according to claim 13, comprising:
an electric motor connected to the servo control system, wherein the servo control system is configured to control the electric motor.

15. The robot according to claim 14, comprising:
a robotic arm connected to an output end of the electric motor.

```
                              ┌─────────────┐
                              │    Start    │
                              └──────┬──────┘
                                     │
                                     ▼
┌────────────────────────────────────────────────────────────────────┐
│   In case where the command interpolation module receives a position │        102
│ command signal, a delay duration corresponding to the position command│  ⌒
│         signal is determined via the command delay module            │
└────────────────────────────────────────────────────────────────────┘
                                     │
                                     ▼
┌────────────────────────────────────────────────────────────────────┐
│      The velocity command determination module determines a velocity │        104
│      feedforward command signal based on the position command signal  │  ⌒
└────────────────────────────────────────────────────────────────────┘
                                     │
                                     ▼
┌────────────────────────────────────────────────────────────────────┐
│      The velocity command determination module transmits the velocity│        106
│           feedforward command signal to the velocity controller       │  ⌒
└────────────────────────────────────────────────────────────────────┘
                                     │
                                     ▼
┌────────────────────────────────────────────────────────────────────┐
│  The command delay module transmits the position command signal to the│       108
│   position controller in a delayed manner based on the delay duration  │  ⌒
└────────────────────────────────────────────────────────────────────┘
                                     │
                                     ▼
                              ┌─────────────┐
                              │     End     │
                              └─────────────┘
```

FIG.1

FIG. 2

Start

Performing low-pass filtering on the velocity feedforward command signal via the filter — 302

Transmitting the filtered velocity feedforward command signal to the velocity controller — 304

End

FIG. 3

Start

The command delay module acquires a loop constant-speed frequency — 402

The command delay module determines a first duration based on the loop constant-speed frequency — 404

The command delay module determines the delay duration based on the first duration and a preset coefficient — 406

End

FIG. 4

Start

The command delay module receives a delay setting signal — 502

The command delay module determines the delay duration based on the delay setting signal — 504

End

FIG. 5

FIG. 6

Determination module — 702

Transmission module — 704

Servo control apparatus — 700

FIG. 7

| | |
|---|---|
| Processor | 802 |
| Memory | 804 |
| Servo control apparatus | 800 |

FIG. 8

| | |
|---|---|
| Servo control apparatus | 800 |
| Computer-readable storage medium | 902 |
| Robot | 900 |

FIG. 9

# INTERNATIONAL SEARCH REPORT

| International application No. |
| --- |
| **PCT/CN2023/139931** |

| A. | CLASSIFICATION OF SUBJECT MATTER |
| --- | --- |

G05D13/62(2006.01)i

According to International Patent Classification (IPC) or to both national classification and IPC

| B. | FIELDS SEARCHED |
| --- | --- |

Minimum documentation searched (classification system followed by classification symbols)

IPC: G05D

Documentation searched other than minimum documentation to the extent that such documents are included in the fields searched

Electronic data base consulted during the international search (name of data base and, where practicable, search terms used)

CNTXT, ENTXT, WPABS, CNKI: 库卡机器人, 钟文进, 王胜平, 张国柱, 控制, 前馈, 微分, 低通, 滤波, 延迟, 延时, 位置, 速度, control, feedforward, front, feed, differential, low, pass+, filter, delay, position, speed

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 6313591 B1 (SIEMENS AG) 06 November 2001 (2001-11-06) <br> description, column 3, line 25-column 7, line 5, and figures 1-5 | 1-15 |
| A | CN 105955203 A (SHENZHEN LEISAI SOFTWARE TECHNOLOGY CO., LTD. et al.) 21 September 2016 (2016-09-21) <br> entire document | 1-15 |
| A | CN 112051726 A (BEIJING INSTITUTE OF CONTROL ENGINEERING) 08 December 2020 (2020-12-08) <br> entire document | 1-15 |
| A | CN 115580194 A (LIANYUNGANG JIERUI ELECTRONICS CO., LTD.) 06 January 2023 (2023-01-06) <br> entire document | 1-15 |
| A | CN 113805596 A (SHENZHEN INVT ELECTRIC CO., LTD.) 17 December 2021 (2021-12-17) <br> entire document | 1-15 |
| A | JP 2003058213 A (MITSUBISHI ELECTRIC CORP.) 28 February 2003 (2003-02-28) <br> entire document | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 March 2024** | **22 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/139931** |

| Patent document cited in search report | | | Publication date (day/month/year) | Patent family member(s) | | | Publication date (day/month/year) |
| --- | --- | --- | --- | --- | --- | --- | --- |
| US | 6313591 | B1 | 06 November 2001 | DE | 60125612 | T2 | 08 November 2007 |
| | | | | EP | 1126344 | A2 | 22 August 2001 |
| | | | | EP | 1126344 | B1 | 03 January 2007 |
| CN | 105955203 | A | 21 September 2016 | CN | 105955203 | B | 24 July 2018 |
| CN | 112051726 | A | 08 December 2020 | CN | 112051726 | B | 11 August 2023 |
| CN | 115580194 | A | 06 January 2023 | None | | | |
| CN | 113805596 | A | 17 December 2021 | None | | | |
| JP | 2003058213 | A | 28 February 2003 | JP | 4867105 | B2 | 01 February 2012 |

Form PCT/ISA/210 (patent family annex) (July 2022)

## REFERENCES CITED IN THE DESCRIPTION

**Patent documents cited in the description**

- CN 202310106021